# EUROPÄISCHE PATENTSCHRIFT

(11) **EP 3 608 149 B1**
(45) Veröffentlichungstag und Bekanntmachung des Hinweises auf die Patenterteilung: **16.11.2022**
(21) Anmeldenummer: 19178318.2
(22) Anmeldetag: 05.06.2019
(51) Int. Cl.: B60K 37/06, G01C 21/34

(54) **VERFAHREN ZUM STEUERN EINER VORRICHTUNG ZUR BEREITSTELLUNG EINER ERINNERUNG IN EINEM FAHRZEUG SOWIE VORRICHTUNG ZUR BEREITSTELLUNG EINER ERINNERUNG IN EINEM FAHRZEUG**
DEVICE FOR PROVIDING A REMINDER IN A VEHICLE AND METHOD FOR CONTROLLING A DEVICE FOR PROVIDING A REMINDER IN A VEHICLE
PROCÉDÉ DE COMMANDE D'UN DISPOSITIF DE FOURNITURE D'UN RAPPEL DANS UN VÉHICULE AINSI QUE DISPOSITIF DE FOURNITURE D'UN RAPPEL DANS UN VÉHICULE

(30) Priorität: 24.07.2018 DE 102018212252
(43) Veröffentlichungstag der Anmeldung: 12.02.2020
(73) Patentinhaber: Robert Bosch GmbH, 70442 Stuttgart (DE)
(72) Erfinder: Andrew, Mark, 60322 Frankfurt (DE); Wiedmann, Christian, 71083 Herrenberg (DE); Rogalla, Oliver, 71665 Vaihingen (DE); Ritter, Rouven, 70469 Stuttgart (DE)

(56) Entgegenhaltungen:
- EP-A2- 1 439 374
- DE-A1-102016 216 200

## Beschreibung

### Stand der Technik

Die Erfindung betrifft ein Verfahren zum Steuern einer Vorrichtung zur Bereitstellung einer Erinnerung in einem Fahrzeug sowie eine Vorrichtung zur Bereitstellung einer Erinnerung in einem Fahrzeug nach den jeweiligen nebengeordneten Ansprüchen.

Die Entwicklung des Internet der Dinge, große Fortschritte in der Sprachverarbeitung sowie der Einzug der Smartphones in viele verschiedene Lebensbereiche führten in den letzten Jahren zu einer intensiven Entwicklung und weitreichenden Verbreitung von "Intelligenten Persönlichen Assistenten" (IPAs). IPAs sind Softwaretools, die gesprochene oder geschriebene natürliche Sprache des Nutzers entgegennehmen, verarbeiten und diesem in entsprechenden Situationen über verschiedene Ausgabekanäle (Text, Sprache) Informationsassistenz bieten. Eine Kernfunktion aller bekannten Assistenten sind "Smart Reminder": Der Nutzer formuliert ein Erinnerungsziel (z.B. einen Gegenstand für die Einkaufsliste) und optional einen Kontext (Zeit und/oder Ort) und wird anschließend in der entsprechenden Situation vom Assistenten daran erinnert.

Die DE 103 01 190 A1 beschreibt eine Informationsvorrichtung für den Benutzer eines Fahrzeugs, die dazu dient, einen Benutzer rechtzeitig auf einen Start für eine Fahrt zu einem Termin hinzuweisen. Der Benutzer gibt hierfür den Ort des Termins und die Startzeit des Termins ein. Mittels eines Rechners wird die Fahrtroute und Fahrtdauer zu dem Ort des Termins ermittelt, gegebenenfalls unter Berücksichtigung der über eine Ortungseinheit ermittelten aktuellen Position des Fahrzeugs (aktuelle Ist-Definitionsgröße einer aktuellen Betriebssituation) und der aktuellen Verkehrslage, und hieraus wird ein Zeitpunkt für den Hinweis an den Benutzer bestimmt.

### Offenbarung der Erfindung

Das der vorliegenden Erfindung zu Grunde liegende Problem wird durch ein Verfahren und eine Vorrichtung mit den Merkmalen der unabhängigen Patentansprüche gelöst. Vorteilhafte Weiterbildungen der Erfindung sind in Unteransprüchen genannt.

Die Erfindung zielt darauf ab, den Nutzer im Fahrzeug an Dinge zu erinnern, die dieser zuvor entweder explizit oder implizit individuell spezifiziert hat (z.B. per Text oder per Sprache). Eine explizite Spezifikation der Erinnerungssituation hat hierbei einen direkten Bezug zu einer mittels einer Erfassungseinrichtung erfassten Betriebssituation des Fahrzeugs. Eine implizite Spezifikation beruht hingegen auf einer Verarbeitung oder Verknüpfung der erfassten Betriebssituation des Fahrzeugs mit externen Informationen zur genauen Bestimmung der Erinnerungssituation. Ganz allgemein spezifiziert der Nutzer über die Kommunikationsschnittstelle eine oder mehrere gewünschte Erinnerungen (z.B. natürlichsprachlich in Form von Text oder Sprache) und verknüpft diese mit einer gewünschten Erinnerungssituation. Dies kann sowohl vom Fahrzeug aus geschehen als auch außerhalb (z.B. unterwegs mit dem Smartphone oder aus dem Smart Home).

Das System synchronisiert dann relevante erfasste Ist-Definitionsgrößen der aktuellen Betriebssituation des Fahrzeugs und überprüft fortwährend, ob die explizit oder implizit spezifizierte gewünschte Erinnerungssituation eingetroffen ist, also mit der aktuellen Betriebssituation des Fahrzeugs übereinstimmt. Wenn dies der Fall ist, also die Erinnerungssituation im Betrieb des Fahrzeugs eintrifft, erinnert das System den im oder am Fahrzeug befindlichen Nutzer beispielsweise durch akustische oder visuelle Darstellung der gewünschten Erinnerung mittels einer Kommunikationsschnittstelle. Optional kann abhängig von der Art der Erinnerung eine weitere Aktion durchgeführt werden.

Zusammengefasst beschreibt die Erfindung ein Gesamtsystem aus mindestens einer Kommunikationsschnittstelle (z.B. Head Unit eines Fahrzeugs, Smartphone, Smart Home), einer Datenspeicherungs- und Verarbeitungskomponente (im Fahrzeug, im Smartphone und/oder in einer Cloud), einer Komponente (gegebenenfalls ebenfalls das Smartphone) mit Zugriff auf Daten, welche die aktuelle Betriebssituation des Fahrzeugs beschreiben, sowie einer Verbindung zwischen den Komponenten. Das erfindungsgemäße System bzw. die erfindungsgemäße Vorrichtung ermöglicht es dem Nutzer, situationsbezogene gewünschte Erinnerungen und gewünschte Erinnerungssituation einzugeben und erinnert diesen in einer entsprechenden Erinnerungssituation im Zusammenhang mit dem aktuellen Betrieb des Fahrzeugs (Betriebssituation) in der gewünschten Weise.

Durch die Einbeziehung der erfassten Fahrzeuginformationen geht die erfindungsgemäße Vorrichtung über existierende Ansätze hinaus, mit denen aufgrund ihrer Limitierung auf Zeit der Erinnerung und Position des Nutzers Erinnerungssituationen nur eingeschränkt darstellbar sind. Wesentliche Funktionen des erfindungsgemäßen Verfahrens und der erfindungsgemäßen Vorrichtung sind also das Aufnehmen von Erinnerungen und hiermit verknüpften Erinnerungssituationen, das Überprüfen, ob die aktuelle Betriebssituation des Fahrzeugs einer eingegebenen Erinnerungssituation entspricht, und das Bereitstellen der Erinnerung dann, wenn die eingegebene Erinnerungssituation der aktuellen Betriebssituation des Fahrzeugs entspricht. Dabei kann dieser Dienst als eigener Dienst oder als Teil eines übergeordneten Intelligenten Persönlichen Assistenten betrieben werden.

Konkret schlägt die Erfindung ein Verfahren zum Steuern einer Vorrichtung zur Bereitstellung einer Erinnerung in einem Fahrzeug vor, bei dem wie folgt vorgegangen wird: zunächst werden eine von einem Benutzer individuell spezifizierte (wobei dies auch eine Auswahl aus einer vordefinierten Liste einschließen kann) und gewünschte Erinnerungssituation und eine dazugehörige und von dem Benutzer ebenfalls individuell spezifizierte und gewünschte Erinnerung (wobei auch dies eine Auswahl aus einer vordefinierten Liste einschließen kann) mittels einer Kommunikationsschnittstelle vom Benutzer eingegeben. Dabei geht die konkrete Erinnerungssituation dann, wenn die Zeit eine Rolle spielt, über eine bloße Zeitangabe in jedem Falle hinaus, indem sie eine weitere eine Situation definierende Größe berücksichtigt, beispielsweise anstelle von "Morgen um 8:00 Uhr" würde die Erinnerungssituation "Morgen früh, wenn ich zur Arbeit fahre" lauten. Die gewünschte Erinnerungssituation und die gewünschten Erinnerung werden dann automatisch in einem Speicher abgespeichert. Aus der eingegebenen gewünschten Erinnerungssituation kann in einer Auswerteeinrichtung automatisch mindestens eine Soll-Definitionsgröße ermittelt werden, welche die eingegebene gewünschten Erinnerungssituation definiert. Im Betrieb des Fahrzeugs wird mindestens eine der Soll-Definitionsgröße entsprechende Ist-Definitionsgröße einer aktuellen Betriebssituation des Fahrzeugs automatisch mittels mindestens einer Erfassungseinrichtung erfasst.

Unter Berücksichtigung der mindestens einen erfassten Ist-Definitionsgröße wird in einer Ermittlungseinrichtung automatisch die tatsächliche aktuelle Betriebssituation des Fahrzeugs ermittelt. Die tatsächliche aktuelle Betriebssituation des Fahrzeugs wird nun mit der abgespeicherten gewünschten Erinnerungssituation in einem Komparator verglichen. Schließlich wird abhängig vom Ergebnis des Vergleichs die gewünschte Erinnerung mittels einer Kommunikationsschnittstelle dem am oder im Fahrzeug befindlichen Nutzer automatisch bereitgestellt. Gegebenenfalls kann eine Aktion, an die durch die gewünschte Erinnerung erinnert wird, auch gleich ausgelöst oder deren Auslösen vorgeschlagen werden.

Die erfindungsgemäße Vorrichtung ist entsprechend ausgestaltet mit einer Kommunikationsschnittstelle zum Eingeben der gewünschten Erinnerungssituation und der gewünschten Erinnerung, einem Speicher, einer Auswerteeinrichtung, mindestens einer Erfassungseinrichtung, einer Ermittlungseinrichtung, einem Komparator und einer Kommunikationsschnittstelle zum Bereitstellen der Erinnerung.

Eine Weiterbildung des erfindungsgemäßen Verfahrens zeichnet sich dadurch aus, dass die Erinnerungssituation und der Erinnerungswunsch im Schritt a. mittels einer fahrzeugseitigen Einrichtung und/oder mittels einer vom Fahrzeug entfernt angeordneten Kommunikationsschnittstelle, insbesondere eines Smartphones, eines Smart Homes und/oder eines Tablet-PC, eingegeben werden. Dabei ist sowohl eine Eingabe mittels Spracherkennung als auch eine Eingabe über eine Tastatur oder ein Display als Text möglich. Bei einer Eingabe mittels Spracherkennung umfasst die Kommunikationsschnittstelle also ein Mikrofon, bei einer Eingabe als Text eine entsprechende manuelle Einrichtung beispielsweise in Form einer Tastatur oder eines sonstigen Eingabegeräts, wie es als Teil einer Head Unit in einem Kraftfahrzeug bekannt ist. Es versteht sich, dass insbesondere die genannten und vom Fahrzeug entfernt angeordneten Kommunikationsgeräte mittels geeigneter drahtloser Kommunikationsverbindungen, beispielsweise Bluetooth^{®}, WLAN, oder mittels geeigneter drahtgebundene Kommunikationsverbindungen mit anderen zur Ausführung des erfindungsgemäßen Verfahrens erforderlichen Komponenten der erfindungsgemäßen Vorrichtung kommunizieren können.

Vorteilhaft ist ferner eine beispielsweise cloudbasierte Durchführung des erfindungsgemäßen Verfahrens, bei dem also mindestens einer der Schritte a., b., d. und e. von dem Fahrzeug entfernt durchgeführt wird. Entsprechend sind also der Speicher und/oder die Ermittlungseinrichtung und/oder der Komparator der erfindungsgemäßen Vorrichtung an einer vom Fahrzeug entfernten Stelle angeordnet. Auf diese Weise kann der in dem Fahrzeug erforderliche Hardwareaufwand reduziert werden. Darüber hinaus kann bei einer solchen cloudbasierten Lösung gegebenenfalls von den Erfahrungen anderer Nutzer profitiert werden, wodurch die Anzahl der möglichen und erkennbaren Erinnerungssituationen erweitert und die Zuverlässigkeit der Ermittlung der einer gewünschten Erinnerungssituation entsprechenden Betriebssituation verbessert wird.

Vorgeschlagen wird ferner, dass die Erinnerungssituation einen bestimmten Fahrzeugzustand, eine bestimmte Fahrsituation und/oder einen bestimmten Umweltzustand umfasst bzw. hierdurch definiert wird, und dass bei der entsprechenden erfindungsgemäßen Vorrichtung mindestens ein entsprechender Sensor am Fahrzeug vorhanden ist, der zur Erfassung einer Größe geeignet ist, die den Fahrzeugzustand, die Fahrsituation und/oder den Umweltzustand charakterisiert.

Der Fahrzeugzustand kann im Zusammenhang mit der vorliegenden Erfindung beispielsweise durch einen Betriebszustand einer technischen Einrichtung des Fahrzeugs definiert sein, beispielsweise einen aktuellen Kraftstoffvorrat, eine verbleibende Reichweite, einen aktuellen Zustand einer Fahrzeugbatterie, einen aktuellen Kraftstoffverbrauch, eine aktuelle Kühlmitteltemperatur, etc.. Der Fahrzeugzustand kann aber alternativ oder zusätzlich auch durch eine Beladung mit Gepäck und/oder Insassen definiert sein. Insoweit kommen als Sensoren klassische Sensoren zur Erfassung technischer Betriebsgrößen des Fahrzeugs infrage, aber beispielsweise auch Sitzbelegungssensoren, eine Kamera, etc. Mittels einer Kamera kann beispielsweise erfasst werden, ob sich Erwachsene und/oder Kinder im Fahrzeug befinden und/oder wie viele Personen sich im Fahrzeug befinden, es können mittels einer Kamera aber auch außerhalb von dem Fahrzeug vorhandene Betriebsgrößen, welche den Fahrzeugzustand charakterisieren, erfasst werden.

Die Fahrsituation kann im Zusammenhang mit der vorliegenden Erfindung eine Geschwindigkeit, eine Querbeschleunigung, eine Routeninformation (bekannte oder neue Strecke), eine Zeit, die der Nutzer bereits im Fahrzeug verbracht hat, eine Verkehrslage, ein bestimmtes Fahrziel, einen bestimmten Ort, an dem die Fahrt begonnen wurde, einen bestimmten Ort, an dem sich das Fahrzeug befindet, etc. umfassen. Aus dieser Aufzählung erkennt man, dass der Begriff "Erfassungseinrichtung" vorliegend sehr breit zu verstehen ist und ebenfalls übliche technische und am Fahrzeug angeordnete Sensoren ebenso wie GPS-Sensoren umfassen kann als auch Einrichtungen, mit denen beispielsweise drahtlos und lediglich mittelbar Informationen beispielsweise über eine aktuelle Verkehrslage von entfernt angeordneten Sensoren empfangen werden können, etc.

Der Umweltzustand kann im Zusammenhang mit der vorliegenden Erfindung beispielsweise Tag oder Nacht, das Wetter (Regen, Schnee, Gewitter, Hitze, Luftdruck, Wind oder Ähnliches), etc. umfassen. Auch hier ist der Begriff "Erfassungseinrichtung" sehr breit zu verstehen und kann sowohl Sensoren umfassen, die am Fahrzeug verbaut sind und den Zustand unmittelbar erfassen, aber auch Einrichtungen umfassen, mit denen beispielsweise drahtlos und lediglich mittelbar Informationen von entfernt angeordneten Sensoren empfangen werden können.

Von Vorteil ist auch ein Computerprogrammprodukt, oder Computerprogramm mit Programmcode, das auf einem Maschinenlesbaren, insbesondere nicht flüchtigen, Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung nach einer der vorstehend beschriebenen Ausführungsformen ausgeführt wird.

Nachfolgend wird die Erfindung unter Bezugnahme auf die beigefügte Zeichnung erläutert. In der Zeichnung zeigen:
- Figur 1: eine schematisierte Darstellung einer Vorrichtung zur Bereitstellung einer Erinnerung in einem Fahrzeug; und
- Figur 2: ein Flussdiagramm eines Verfahrens zum Steuern einer Vorrichtung zur Bereitstellung einer Erinnerung in einem Fahrzeug.

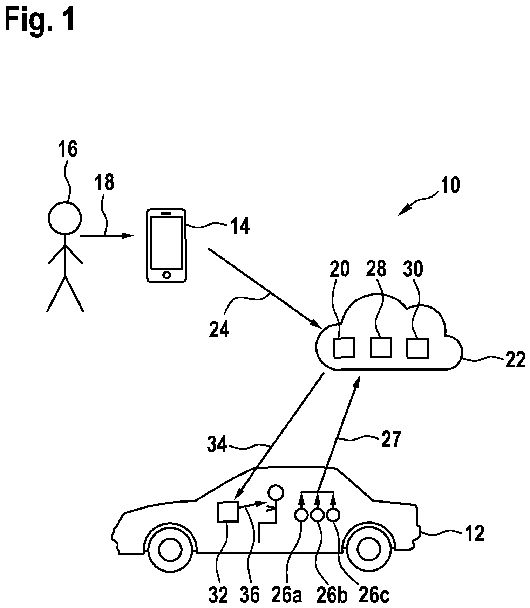

Eine Vorrichtung zur Bereitstellung einer Erinnerung in einem Fahrzeug trägt in Figur 1 insgesamt das Bezugszeichen 10 . Das schematisch dargestellte Fahrzeug ist mit dem Bezugszeichen 12 bezeichnet.

Zu der Vorrichtung 10 gehört zunächst eine erste Kommunikationsschnittstelle 14, die vorliegend beispielhaft als Smartphone ausgebildet ist. Grundsätzlich sind aber auch andere Arten von ersten Kommunikationsschnittstellen 14 denkbar, beispielsweise ein Smart Home Eingabegerät oder ein Tablet-PC. Die erste Kommunikationsschnittstelle 14 kann auch mit dem Fahrzeug 12 verbunden bzw. in diesem angeordnet sein. Mit der ersten Kommunikationsschnittstelle 14 kann ein Benutzer 16 mittels Spracherkennung oder mittels Texteingabe eine individuell spezifizierte und gewünschte Erinnerungssituation und eine mit dieser verknüpfte individuell spezifizierte und gewünschte Erinnerung eingeben. Dies ist durch einen Pfeil 18 angedeutet. Beispiele für Erinnerungssituationen sind "Fahrzeug 12 befindet sich im Stau", "Kraftstoffvorrat sinkt unter 50 %", "Kinder befinden sich im Innenraum", "Fahrzeug 12 befindet sich morgens auf dem Weg zur Arbeit", "Fahrzeug 12 befindet sich abends auf dem Weg nach Hause". Dies sind jedoch nur einige Beispiele, es sind noch ganz andere Erinnerungssituationen denkbar, bei denen es sich insoweit um Situationen des Fahrzeugs 12 handelt, in denen der Benutzer 16 wünscht, eine bestimmte Erinnerung zu erhalten. Eine solche Erinnerung kann beispielsweise sein: "zur nächstgelegenen Tankstelle fahren", "ein Hörbuch abspielen", "eine bestimmte Person anrufen", etc. Auch diese Aufzählung ist selbstverständlich nicht abschließend, sondern es sind beinahe beliebige andere Erinnerungen möglich.

Zu der Vorrichtung 10 gehört ferner ein Speicher 20 , in dem die vom Benutzer 16 gewünschte und in die erste Kommunikationsschnittstelle 14 eingegebene Erinnerungssituation und die gewünschte und eingegebene Erinnerung abgespeichert werden können. Vorliegend beispielhaft ist der Speicher 20 sowohl von der ersten Kommunikationsschnittstelle 14 als auch von dem Fahrzeug 12 entfernt in einer Cloud 22 angeordnet. Von der ersten Kommunikationsschnittstelle 14 zu der Cloud 22 wird die Information drahtlos übertragen, beispielsweise unter Verwendung von Bluetooth und/oder WLAN sowie von drahtgebundenen Übertragungstechniken, was durch einen Pfeil 24 angedeutet ist. Grundsätzlich denkbar ist aber auch, dass der Speicher 20 beispielsweise im Fahrzeug 12 selbst oder beispielsweise in dem Smartphone 14 angeordnet ist.

In und an dem Fahrzeug 12 sind mehrere Erfassungseinrichtungen 26a-c angeordnet, mit denen Ist-Definitionsgrößen einer aktuellen Betriebssituation des Fahrzeugs 12 erfasst werden können. Die Begrenzung auf drei Erfassungseinrichtungen 26a-c ist vorliegend lediglich beispielhaft, es können selbstverständlich auch weniger oder mehr Erfassungseinrichtungen vorgesehen sein. Die hierdurch definierbaren Betriebsituationen entsprechen den oben aufgezählten Erinnerungssituationen. Als Erfassungseinrichtungen 26a-c kommen ganz unterschiedliche Sensoren infrage, die beispielsweise einen Fahrzeugzustand und/oder eine Fahrsituation zu definieren vermögen, welche beide gemeinsam oder alternativ eine aktuelle Betriebssituation des Fahrzeugs 12 definieren können.

Der Fahrzeugzustand kann durch einen Betriebszustand einer technischen Einrichtung des Fahrzeugs 12 definiert sein, beispielsweise einen aktuellen Kraftstoffvorrat, eine verbleibende Reichweite, einen aktuellen Zustand einer Fahrzeugbatterie, einen aktuellen Kraftstoffverbrauch, eine aktuelle Kühlmitteltemperatur, etc.. Der Fahrzeugzustand kann aber alternativ oder zusätzlich auch durch eine Beladung mit Gepäck und/oder Insassen definiert sein. Insoweit kommen als Erfassungseinrichtungen 26a-c klassische Sensoren zur Erfassung technischer Betriebsgrößen des Fahrzeugs 12 infrage, aber beispielsweise auch Sitzbelegungssensoren, eine Kamera, etc. Mittels einer Kamera kann beispielsweise erfasst werden, ob sich Erwachsene und/oder Kinder im Fahrzeug 12 befinden und/oder wie viele Personen sich im Fahrzeug 12 befinden, es können mittels einer Kamera aber auch außerhalb von dem Fahrzeug 12 vorhandene Betriebsgrößen, welche den Fahrzeugzustand charakterisieren, erfasst werden.

Die Fahrsituation kann vorliegend beispielhaft eine Geschwindigkeit, eine Querbeschleunigung, eine Routeninformation (bekannte oder neue Strecke), eine Zeit, die der Benutzer 16 bereits im Fahrzeug 12 verbracht hat, eine Verkehrslage, ein bestimmtes Fahrziel, einen bestimmten Ort, an dem die Fahrt begonnen wurde, einen bestimmten Ort, an dem sich das Fahrzeug 12 befindet, etc. umfassen. Aus dieser Aufzählung erkennt man, dass der Begriff "Erfassungseinrichtung" vorliegend sehr breit zu verstehen ist und ebenfalls übliche technische und am Fahrzeug angeordnete Sensoren ebenso wie GPS-Sensoren umfassen kann als auch Einrichtungen, mit denen beispielsweise drahtlos und lediglich mittelbar Informationen beispielsweise über eine aktuelle Verkehrslage von entfernt angeordneten Sensoren empfangen werden können, etc.

Die aktuelle Betriebssituation kann aber auch einen Umweltzustand umfassen, der vorliegend beispielhaft Tag oder Nacht, das Wetter (Regen, Schnee, Gewitter, Hitze, Luftdruck, Wind oder Ähnliches), etc. umfassen kann. Auch hier ist der Begriff "Erfassungseinrichtung" sehr breit zu verstehen und kann sowohl Sensoren umfassen, die am Fahrzeug 12 verbaut sind und den Zustand unmittelbar erfassen, aber auch Einrichtungen umfassen, mit denen beispielsweise drahtlos und lediglich mittelbar Informationen von vom Fahrzeug 12 entfernt angeordneten Sensoren empfangen werden können.

Die Erfassungseinrichtungen 26a-c übermitteln die erfassten Informationen vorliegend beispielhaft ebenfalls an die Cloud 22, wie durch einen Pfeil 27 angedeutet ist. Grundsätzlich denkbar wäre aber auch, dass die Informationen beispielsweise an das Smartphone 14 übertragen werden, sofern dieses mit dem Fahrzeug 12 in einer Kommunikationsverbindung steht. Aus den von den Erfassungseinrichtungen 26a-c bereitgestellten Informationen wird in einer ebenfalls zu der Vorrichtung 10 gehörenden Ermittlungseinrichtung 28 die tatsächliche aktuelle Betriebssituation des Fahrzeugs 12 ermittelt. Vorliegend beispielhaft ist die Ermittlungseinrichtung 28 ebenfalls in der Cloud 22 angeordnet. Möglich ist grundsätzlich aber auch, dass die Ermittlungseinrichtung 28 im Fahrzeug 12 angeordnet ist.

Bei der Ermittlungseinrichtung 28 handelt es sich üblicherweise um einen Computer mit einem Mikroprozessor, auf dem Software ablaufen kann. Beispielsweise wird mittels der Ermittlungseinrichtung 28 ermittelt, dass die Betriebssituation "Fahrzeug 12 befindet sich im Stau" vorliegt, wenn sich aus den Signalen der Erfassungseinrichtungen 26a-c ergibt, dass sich das Fahrzeug 12 auf einer Autobahn befindet und über einen bestimmten Zeitraum die durchschnittliche Fahrzeuggeschwindigkeit kleiner ist als ein Grenzwert.

Ferner gehört zu der Vorrichtung 10 ein Komparator 30, der ständig die mittels der Ermittlungseinrichtung 28 ermittelte tatsächliche aktuelle Betriebssituation des Fahrzeugs 12 mit der im Speicher 20 abgespeicherten und vom Benutzer 16 gewünschten Erinnerungssituation vergleicht. Auch der Komparator 30 ist vorliegend beispielhaft in der Cloud 22 angeordnet, er könnte aber ebenfalls beispielsweise im Fahrzeug 12 oder in dem Smartphone 14 angeordnet sein. Er ist ebenfalls üblicherweise in Form von Software ausgebildet, die auf einem Prozessor abläuft.

Schließlich gehört zu der Vorrichtung 10 auch noch eine zweite Kommunikationsschnittstelle 32, die vorliegend im Fahrzeug 12 fest angeordnet ist und vorliegend beispielhaft Teil einer im übrigen nicht weiter dargestellten sogenannten "Head Unit" des Fahrzeugs 12 ist. Eine solche Head Unit bzw. Haupteinheit gehört zu in heutigen Fahrzeugen 12 üblicherweise vorhandenen Infotainmentsystemen. Sie kann beispielhaft, ähnlich wie ein PC, SDRAM-Bausteine und eine CPU umfassen. Hinzu kommen digitale Signalprozessoren sowie logische Schaltungen für die Audioaufbereitung, MP3-Decodierung und Grafikberechnung für 2D- und 3D-Effekte, etc. Bei der zweiten Kommunikationsschnittstelle kann es sich beispielsweise um eine Sprachausgabe, eine Anzeige auf einem Bildschirm im Fahrzeug 12, ein Headup-Display im Fahrzeug 12, oder Ähnliches handeln.

Wird durch den Komparator 30 festgestellt, dass die mittels der Ermittlungseinrichtung 28 ermittelte aktuelle Betriebssituation des Fahrzeugs 12 und die im Speicher 20 abgespeicherte und vom Benutzer 16 gewünschte Erinnerungssituation übereinstimmen, wird aus dem Speicher 20 die mit der spezifischen Erinnerungssituation verknüpfte gewünschte Erinnerung abgerufen und an die zweite Kommunikationsschnittstelle 32 übertragen (Pfeil 34). Dort wird dem im Fahrzeug 12 befindlichen Benutzer 16 die Erinnerung bereitgestellt, wie durch einen Pfeil 36 angedeutet ist.

Lediglich beispielhaft seien nachfolgend einige mögliche Erinnerungssituationen und hiermit verknüpfte Erinnerungen tabellarisch dargestellt:

| Erinnerungssituation | Erinnerung |
|---|---|
| Kraftstoffvorrat sinkt unter 50 % | Zu einer Tankstelle fahren |
| Kinder sitzen im Auto | Hörbuch abspielen |
| Fahrzeug steht im Stau | Person XY anrufen |
| Fahrzeug befindet sich morgens auf dem Weg zur Arbeit | Brezel kaufen |
| Fahrzeug befindet sich abends auf dem Weg nach Hause, Gewittersituation liegt vor | Zu Hause anrufen wegen offener Fenster |

Es versteht sich, dass bei einer entsprechenden Programmierung der zweiten Kommunikationsschnittstelle 32 bzw. der hierzu gehörenden Head Unit die Aktion, an die erinnert wird, auch unmittelbar eingeleitet werden kann, beispielsweise der Anruf, an den erinnert wird, gleich ausgelöst wird.

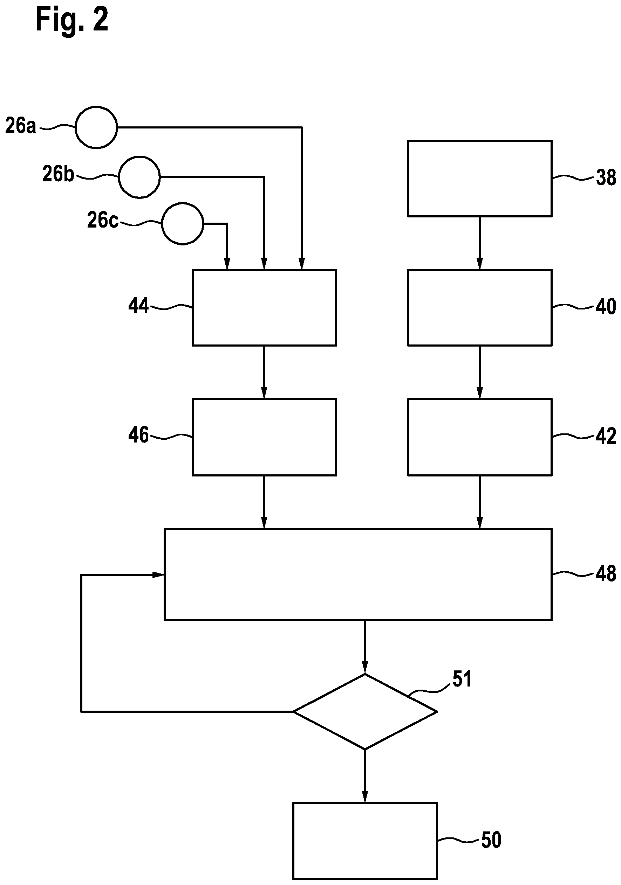

Das oben allgemein beschriebene Verfahren wird nun noch unter Bezugnahme auf das Flussdiagramm von Figur 2 erläutert. In einem Block 38 spezifiziert der Benutzer 16 die gewünschte Erinnerungssituation sowie die gewünschte Erinnerung, ganz allgemein beispielsweise in der Form "Erinnere mich an X, wenn Erinnerungssituation = Y". In einem Block 40 wird diese Spezifikation beispielsweise mittels der ersten Kommunikationsschnittstelle 14 empfangen und weitergeleitet. In einem Block 42 wird die gewünschte Erinnerungssituation beispielsweise in dem oben erwähnten Speicher 20 abgespeichert.

Parallel hierzu erfassen in einem Block 44 im tatsächlichen Betrieb des Fahrzeugs 12 die Erfassungseinrichtungen 26a-c Informationen in Form von ist-Definitionsgrößen, welche die aktuelle Betriebssituation des Fahrzeugs 12 definieren. In einem Block 46 wird beispielsweise mittels der oben erwähnten Ermittlungseinrichtung 28 aus den übermittelten Informationen die aktuelle Betriebssituation des Fahrzeugs 12 ermittelt. In einem Block 48 wird beispielsweise mittels des oben erwähnten Komparators 30 die ermittelte aktuelle Betriebssituation des Fahrzeugs 12 mit der beispielsweise in dem oben erwähnten Speicher 20 abgespeicherten gewünschten Erinnerungssituation verglichen. Wird im Block 48 festgestellt, dass die ermittelte aktuelle Betriebssituation des Fahrzeugs 12 und die abgespeicherte und vom Benutzer 16 individuell spezifizierte und gewünschte Erinnerungssituation übereinstimmen, wird über einen Entscheidungsblock 51 in einem Block 50 die ebenfalls beispielsweise in dem Speicher 20 abgespeicherte und mit der spezifischen Erinnerungssituation verknüpfte Erinnerung abgerufen und dem Benutzer 16 im Fahrzeug 12 bereitgestellt. Optional kann darüber hinaus auch gleich die Aktion, an die durch die Erinnerung erinnert wird, ausgeführt werden.

## Patentansprüche

1. Verfahren zum Steuern einer Vorrichtung (10) zur Bereitstellung einer Erinnerung in einem Fahrzeug (12), umfassend die folgenden Schritte:
a. Eingeben einer gewünschten Erinnerungssituation und einer gewünschten Erinnerung mittels einer Kommunikationsschnittstelle (14);
b. Abspeichern der gewünschten Erinnerungssituation und der gewünschten Erinnerung in einem Speicher (20),
c. Erfassen mindestens einer Ist-Definitionsgröße einer aktuellen Betriebssituation des Fahrzeugs mittels mindestens einer Erfassungseinrichtung (26a-c);
d. Ermitteln der aktuellen Betriebssituation unter Berücksichtigung der erfassten Ist-Definitionsgröße in einer Ermittlungseinrichtung (28);
e. Vergleichen der aktuellen Betriebssituation mit der gewünschten Erinnerungssituation in einem Komparator (30) daraufhin, ob die gewünschte Erinnerungssituation mit der aktuellen Betriebssituation des Fahrzeugs übereinstimmt;
f. Bereitstellen der Erinnerung mittels einer Kommunikationsschnittstelle (32) abhängig vom Ergebnis des Vergleichs.

2. Verfahren nach Anspruch 1, bei dem die Erinnerungssituation und der Erinnerungswunsch im Schritt a. mittels einer fahrzeugseitigen und/oder mittels eines vom Fahrzeug (12) entfernten Kommunikationsschnittstelle (14), insbesondere eines Smartphones und/oder eines Smart Homes und/oder eines Tablet-PC, eingegeben werden.

3. Verfahren nach einem der vorhergehenden Ansprüche, bei dem mindestens einer der Schritte a., b., d. und e. von dem Fahrzeug (12) entfernt durchgeführt wird.

4. Verfahren nach einem der vorhergehenden Ansprüche, bei dem die Erinnerungssituation einen bestimmten Fahrzeugzustand, eine bestimmte Fahrsituation und/oder einen bestimmten Umweltzustand umfasst.

5. Vorrichtung (10) zur Bereitstellung einer Erinnerung in einem Fahrzeug (12), umfassend
a. eine Kommunikationsschnittstelle (14) zum Eingeben einer gewünschten Erinnerungssituation und einer gewünschten Erinnerung;
b. einen Speicher (20) zum Abspeichern der gewünschten Erinnerungssituation und der gewünschten Erinnerung;
c. mindestens eine Erfassungseinrichtung (26a-c) zum Erfassen einer Ist-Definitionsgröße einer aktuellen Betriebssituation des Fahrzeugs (12);
d. eine Ermittlungseinrichtung (28) zum Ermitteln der aktuellen Betriebssituation unter Berücksichtigung der erfassten Ist-Definitionsgröße;
e. einen Komparator (30) zum Vergleichen der aktuellen Betriebssituation mit der gewünschten Erinnerungssituation;
f. eine Kommunikationsschnittstelle (32) zum Bereitstellen der Erinnerung abhängig vom Ergebnis des Vergleichs.

6. Vorrichtung (10) nach Anspruch 5, bei der die Kommunikationsschnittstelle (14) gemäß a. ein Mikrofon oder eine manuelle Einrichtung umfasst.

7. Vorrichtung (10) nach einem der Ansprüche 5-6, bei der die Kommunikationsschnittstelle (14) zum Eingeben der gewünschten Erinnerungssituation und der gewünschten Erinnerung und/oder die Kommunikationsschnittstelle (32) zum Bereitstellen der Erinnerung in einem Fahrzeug (12) oder vom Fahrzeug (12) entfernt, insbesondere an einem Smartphone, einem Smart Home und/oder einem Tablet-PC vorhanden ist.

8. Vorrichtung (10) nach einem der Ansprüche 5-7, bei der die Erfassungseinrichtung (26a-c) mindestens einen Sensor zum Erfassen eines Fahrzeugzustands und/oder einer Fahrsituation und/oder einer Umweltsituation umfasst.

9. Vorrichtung (10) nach einem der Ansprüche 5-8, bei der der Speicher (20) und/oder die Ermittlungseinrichtung (28) und/oder der Komparator (30) an einer vom Fahrzeug (12) entfernten Stelle, insbesondere in einer Cloud (22), angeordnet sind.

10. Computerprogramm, umfassend Befehle, die bewirken, dass die Vorrichtung (10) nach einem der Ansprüche 5 bis 8 die Verfahrensschritte nach einem der Ansprüche 1 bis 4 ausführt.

11. Maschinenlesbares, insbesondere nicht flüchtiges, Speichermedium, auf dem das Computerprogramm nach Anspruch 10 gespeichert ist.

## Claims

1. Method for controlling an apparatus (10) for providing a reminder in a vehicle (12), comprising the following steps:
a. inputting a required reminder situation and a required reminder by means of a communication interface (14);
b. storing the required reminder situation and the required reminder in a memory (20);
c. recording at least one actual definition quantity of a current operating situation of the vehicle by means of at least one recording device (26a-c);
d. determining the current operating situation in light of the recorded actual definition quantity in a determination device (28);
e. comparing the current operating situation with the required reminder situation in a comparator (30) to ascertain whether the required reminder situation tallies with the current operating situation of the vehicle;
f. providing the reminder by means of a communication interface (32) on the basis of the result of the comparison.

2. Method according to Claim 1, wherein the reminder situation and the reminder requirement are input in step a. by means of an in-vehicle and/or by means of a communication interface (14) that is remote from the vehicle (12), in particular a smartphone and/or a smart home and/or a tablet PC.

3. Method according to either of the preceding claims, wherein at least one of steps a., b., d. and e. is carried out remotely from the vehicle (12).

4. Method according to one of the preceding claims, wherein the reminder situation comprises a specific vehicle state, a specific driving situation and/or a specific environmental state.

5. Apparatus (10) for providing a reminder for a vehicle (12),
comprising
a. a communication interface (14) for inputting a required reminder situation and a required reminder;
b. a memory (20) for storing the required reminder situation and the required reminder;
c. at least one recording device (26a-c) for recording an actual definition quantity of a current operating situation of the vehicle (12);
d. a determination device (28) for determining the current operating situation in light of the recorded actual definition quantity;
e. a comparator (30) for comparing the current operating situation with the required reminder situation;
f. a communication interface (32) for providing the reminder on the basis of the result of the comparison.

6. Apparatus (10) according to Claim 5, wherein the communication interface (14) according to a. comprises a microphone or a manual device.

7. Apparatus (10) according to either of Claims 5-6, wherein the communication interface (14) for inputting the required reminder situation and the required reminder and/or the communication interface (32) for providing the reminder are/is present in a vehicle (12) or remotely from the vehicle (12), in particular on a smartphone, a smart home and/or a tablet PC.

8. Apparatus (10) according to one of Claims 5-7, wherein the recording device (26a-c) comprises at least one sensor for recording a vehicle state and/or a driving situation and/or an environmental situation.

9. Apparatus (10) according to one of Claims 5-8, wherein the memory (20) and/or the determination device (28) and/or the comparator (30) are arranged at a site that is remote from the vehicle (12), in particular in a cloud (22).

10. Computer program comprising instructions that cause the apparatus (10) according to one of Claims 5 to 8 to perform the method steps according to one of Claims 1 to 4.

11. Machine-readable, in particular non-volatile, storage medium on which the computer program according to Claim 10 is stored.

## Revendications

1. Procédé de commande d'un dispositif (10) pour la fourniture d'un rappel dans un véhicule (12), comprenant les étapes suivantes consistant à :
a) entrer une situation de rappel souhaitée et un rappel souhaité au moyen d'une interface de communication (14) ;
b) mémoriser la situation de rappel souhaitée et le rappel souhaité dans une mémoire (20) ;
c) détecter au moins une grandeur de définition réelle d'une situation de fonctionnement actuelle du véhicule au moyen d'au moins un équipement de détection (26a-c) ;
d) déterminer la situation de fonctionnement actuelle en tenant compte de la grandeur de définition réelle détectée dans un équipement de détermination (28) ;
e) comparer la situation de fonctionnement actuelle avec la situation de rappel souhaitée dans un comparateur (30) pour savoir si la situation de rappel souhaitée coïncide avec la situation de fonctionnement actuelle du véhicule ;
f) fournir le rappel au moyen d'une interface de communication (32) en fonction du résultat de la comparaison.

2. Procédé selon la revendication 1, dans lequel la situation de rappel et le souhait de rappel à l'étape a) sont entrés au moyen d'un côté véhicule et/ou au moyen d'une interface de communication (14) éloignée du véhicule (12), en particulier d'un smartphone et/ou d'un dispositif de maison intelligente et/ou d'une tablette PC.

3. Procédé selon l'une quelconque des revendications précédentes, dans lequel au moins l'une des étapes a), b), d) et e) est effectuée à distance du véhicule (12).

4. Procédé selon l'une quelconque des revendications précédentes, dans lequel la situation de rappel comprend un certain état de véhicule, une certaine situation de conduite et/ou un certain état d'environnement.

5. Dispositif (10) permettant de fournir un rappel pour un véhicule (12), comprenant
a) une interface de communication (14) pour entrer une situation de rappel souhaitée et un rappel souhaité ;
b) une mémoire (20) pour mémoriser la situation de rappel souhaitée et le rappel souhaité ;
c) au moins un équipement de détection (26a-c) pour détecter une grandeur de définition réelle d'une situation de fonctionnement actuelle du véhicule (12) ;
d) un équipement de détermination (28) pour déterminer la situation de fonctionnement actuelle en tenant compte de la grandeur de définition réelle détectée ;
e) un comparateur (30) pour comparer la situation de fonctionnement actuelle avec la situation de rappel souhaitée ;
f) une interface de communication (32) pour fournir le rappel en fonction du résultat de la comparaison.

6. Dispositif (10) selon la revendication 5, dans lequel l'interface de communication (14) selon l'étape a) comprend un microphone ou un équipement manuel.

7. Dispositif (10) selon l'une quelconque des revendications 5 et 6, dans lequel l'interface de communication (14) pour entrer la situation de rappel souhaitée et le rappel souhaité et/ou l'interface de communication (32) pour fournir le rappel est/sont présente(s) sur un véhicule (12) ou à distance du véhicule (12), en particulier sur un smartphone, un dispositif de maison intelligente et/ou une tablette PC.

8. Dispositif (10) selon l'une quelconque des revendications 5 à 7, dans lequel l'équipement de détection (26a-c) comprend au moins un capteur pour détecter un état de véhicule et/ou une situation de conduite et/ou une situation d'environnement.

9. Dispositif (10) selon l'une quelconque des revendications 5 à 8, dans lequel la mémoire (20) et/ou l'équipement de détermination (28) et/ou le comparateur (30) sont disposés à un endroit éloigné du véhicule (12), en particulier dans un environnement cloud (22).

10. Programme informatique, comprenant des commandes qui font que le dispositif (10) selon l'une quelconque des revendications 5 à 8 exécute les étapes de procédé selon l'une quelconque des revendications 1 à 4.

11. Support de stockage lisible par machine, en particulier non volatile, sur lequel est stocké le programme informatique selon la revendication 10.
